# NEW EUROPEAN PATENT SPECIFICATION

(11) **EP 0 607 694 B2**
(45) Date of publication and mention of the opposition decision: **14.06.2006**
(45) Mention of the grant of the patent: 29.03.2000
(21) Application number: 93310449.9
(22) Date of filing: 21.12.1993
(51) Int. Cl.: G06F 3/033

(54) **Cordless digitizer**
Schnurloses Digitalisiergerät
Numériseur sans fil

(30) Priority: 22.12.1992 GB 9226645
(43) Date of publication of application: 27.07.1994
(73) Proprietor: T.D.S. CAD-GRAPHICS LTD., Blackburn BB1 5th (GB)
(72) Inventor: Oakley,Andrew, Blackburn Lancashire,BB2 6EB (GB); Unsworth,Peter, Slaidburn Lancashire,BB7 3EP (GB)
(74) Representative: Williams, David John

(56) References cited:
- EP-A- 0 457 219
- EP-A- 0 511 406
- JP-A- 593 537
- JP-A- 2 583 500
- US-A- 4 848 496
- US-A- 4 878 553
- US-A- 4 999 461
- US-A- 5 023 408
- US-A- 5 028 745
- US-A- 5 045 645
- US-A- 5 136 125
- US-A- 5 466 896

## Description

The present invention relates to a graphic digitizer and a method of operating the same.

Graphic digitizers are widely used in desk top publishing and computer aided design (CAD) systems as a means of translating the location of a pointing device on a digitizing tablet into coordinates on a screen-monitor. Typically the pointing device comprises a pen-shaped instrument or stylus, or else it comprises a cursor having a substantially flat portion which is slidable over the surface of the digitizing tablet. A computer with which the apparatus is associated is able to recognise the location of the pointing device on the tablet.

Prior art systems of this kind employ a plurality of electrical conductors below the surface of the tablet which conductors have electrical signals induced in them from a magnetic field produced by a coil in the pointing device. The coil in the pointing device is conventionally energised through a cord leading from a power supply to the pointing device. By analyzing which of the conductors is experiencing an induced electrical signal, and by analyzing the magnitude and, where necessary, the phase of the induced signals, the computer is able to identify the exact location of the pointing device on the tablet.

Such prior art systems are disadvantageous in that the cord of the pointing device may restrict its movement. A suggested alternative employs one or more batteries in the pointing device to energise the coil. However, the use of batteries has the disadvantage that the pointing device must be made undesirably larger to accommodate them or else if the batteries are small they may be relatively short-lived.

A known digitizing tablet and pointing device which does away with the need for either a corded pointing device or a battery in the pointing device uses a driving grid located in the tablet to induce an electrical signal into the coil of the pointing device, thereby causing it to resonate and to induce electrical signals in one or more sensing conductors in the tablet. In order to overcome the problem of the driving grid directly inducing electrical signals into the sensing conductors, thereby making difficult the measurement of any signals induced by the pointing device, the prior art device is made to cease transmission of the driving signal and then "listen" for the signal induced from the resonating coil of the pointing device into the conductors. In order to allow any potentially confusing transient signals to subside it is necessary to wait a short while after suspending the transmission of the driving signal, before commencing the monitoring of the conductors for any signals induced by the pointing device.

A disadvantage of this system is that it is relatively slow due to the necessity to suspend transmission, wait, and then monitor each of the conductors in the tablet. Speedy processing of position data is vital for accurate real-time representation of the movement of the pointing device.

Furthermore, once the driving signal has been suspended the signal induced in the conductors from the coil of the pointing device begins to decay exponentially which makes the accurate measurement of the signals difficult.

A further prior art system as disclosed in U.S. patent number 5,045,645 in the name of Hoendervoogt et al, avoids the necessity to suspend transmission of the drive signal when motoring the pointer-induced signal. This is achieved by driving the pointer with a composite signal including a high frequency carrier component onto which is superimposed a much lower frequency modulating component. The pointer is provided with two tuned circuits, the first of which resonates at the carrier frequency and the second of which resonates at the modulating frequency. The two tuned circuits are connected via a diode arrangement which permits energy from the first tuned circuit at the higher carrier frequency to drive the second tuned circuit at the lower modulating frequency. A set of conductors in the tablet picks up signals induced by the second tuned circuit at the lower frequency, and processing means is arranged to translate the magnitude and phase of the signals into position data.

A disadvantage of this system is that it must use a high carrier frequency which can interfere with other apparatus in the vicinity of the tablet (ie. radio frequency interference). Another disadvantage is that the device is inefficient since only a portion of the energy of the drive signal, namely that of the lower frequency modulating signal, is used to induce the signals which are detected in the conductors.

According to a first aspect of the present invention there is provided a digitizing apparatus according to claim 1.

Preferably, the position indication device comprises a cordless pointer.

Preferably the sensor means comprises at least a first coil portion which is wound in a first winding orientation and at least a second coil portion which is wound in a second winding orientation, opposed to the first winding orientation.

In a preferred arrangement the sensor means comprises a plurality of coils wherein a number of the coils may comprise first and second coil portions.

Preferably at least some of the coils are arranged in a first configuration and at least some others of the coils are arranged in a second configuration, substantially orthogonal to the first configuration.

In a preferred arrangement at least some of the coils of the sensor means are arranged such that for each coil portion of the first winding orientation, there is a coil portion of the second winding orientation.

The drive means may comprise at least one electrical conductor. Preferably the drive means comprises a plurality of electrical conductors.

In a preferred arrangement the drive means comprises a number of first electrical conductors in a first configuration and a number of second electrical conductors in a second configuration, substantially orthogonal to the first configuration.

Preferably at least one of the electrical conductors of the drive means comprises an electrically conducting coil in use.

In a preferred arrangement, the position indication device comprises a tuned circuit.

The invention may be carried into practice in various ways but specific embodiments will now be described by way of example with reference to the accompanying diagrammatic drawings in which:
Figure 1 shows schematically a digitizing tablet and a pointing device according to an embodiment of the present invention,
Figure 2 shows a circuit of a pointing device for use with the digitizing tablet of figure 1.
Figure 3 shows in more detail a portion of the digitizing tablet of figure 1.
Figure 4 represents an electric current signal in a circuit of figure 2 in use,
Figure 5 represents an electric current in the circuit of figure 2 in alternative use.
Figure 6 shows a circuit of an alternative pointing device for use with the digitizing tablet of figure 1,
Figure 7 shows schematically an alternative embodiment of digitizing tablet, and
Figure 8 shows in more detail a portion of the digitizing tablet of figure 7.

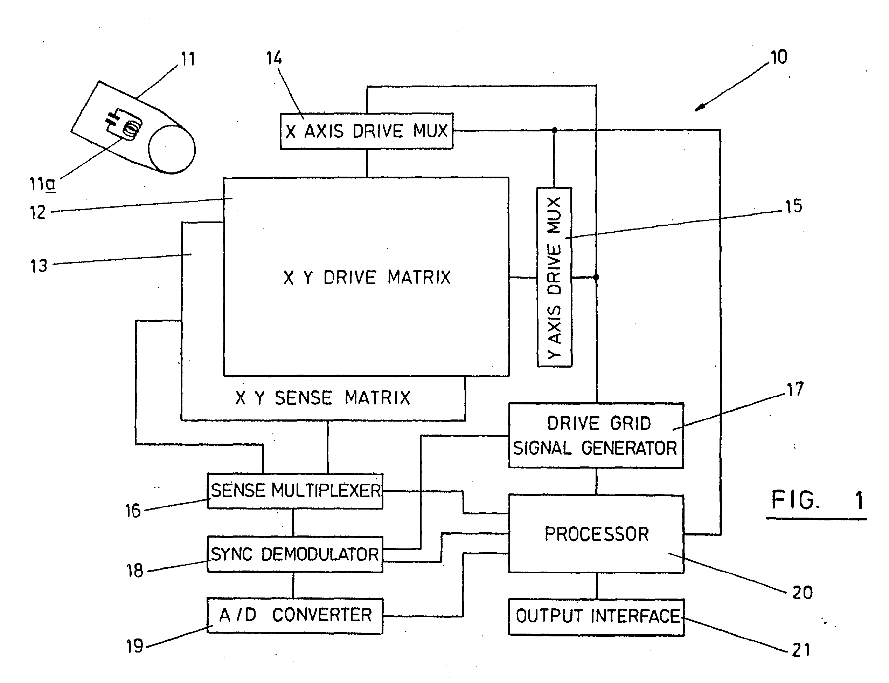

Referring particularly to figure 1, this shows generally at 10 a digitizing tablet and a cordless pointer 11 arranged, in use, to move over a rectangular contact surface (not shown) of the tablet 10.

The digitizer 10 comprises a drive matrix 12 having a first plurality of driving conducting coils (not shown) arranged in a first orientation and a second plurality of driving conducting coils (not shown) arranged in a second orientation orthogonal to the first driving coils. A sense matrix 13 comprises a first plurality of sensing conducting coils (not shown) arranged in a first orientation, and a second plurality of sensing conducting coils (not shown) arranged in a second configuration orthogonal to the first sensing coils.

Drive multiplexers 14 and 15 are arranged, in use, to supply selectively electric current to any of the first drive coils (hereinafter referred to as the X drive coils) or to any of the second drive coils (hereinafter referred to as the Y drive coils) respectively.

Current induced in any of the first and second sense coils (hereinafter referred to as the X and Y sense coils respectively) is routed to a sense multiplexer 16. An amplifier (not shown) amplifies the level of the signals received in the sense coils.

In use, when the drive multiplexers 14 and 15 route alternating electric current into the X or Y driving coils (not shown) of the driving matrix 12 the associated changing magnetic field induces a voltage signal in a tuned circuit 11a of the pointer 11. The substantially sinusoidal drive signal is produced in a drive multiplexer signal generator 17 and is generated by a programmable signal source which is locked to a stable reference frequency.

The resultant current in the pointer 11 then gives rise to a magnetic field which induces a voltage signal in the X and Y sense coils of the sense matrix 13.

After the sensed voltage signals have been fed into the sense multiplexer they are de-modulated by a synchronous de-modulator 18. The de-modulated signals are then converted into digital signals in an analogue to digital converter 19 before being input into a micro-processor 20 which calculates the position of the pointer 11 on the tablet 10. The calculated position data is then output to a host device such as a computer (not shown) via an interface 21.

In more detail, the sense matrix 13 comprises a balanced array of conducting coils laid side by side, each coil being paired with an identical but oppositely wound coil, the coils being inter-connected so as to give a multi-phase output signal. The pattern of inter connection is repeated many times over the area of the tablet 10, with each complete pattern being referred to commonly as a "pitch".

The sense matrix 13 has two separate and independent arrays of coils which are placed orthogonal to each other to permit position sensing in perpendicular axes X and Y The pattern of coils may be produced by conventional techniques such as etching, vacuum depositing, screen printing or wiring of a conductive material or any suitable combination of these techniques.

The drive matrix 12 is also formed as two orthogonal arrays, for driving in an X axis and a Y axis, and may be fabricated by the same techniques as is the sense matrix. The drive grid comprises individual coils laid side by side which coils are nominally of a pitch (or smaller) in width.

The drive multiplexers 14 and 15 are arranged to route excitation current into any of the X drive coils or Y drive coils. The operation of these multiplexers is controlled by the micro-processor 20 and the drive multiplexers utilise field effect transistors (not shown) to switch current into the drive coils.

The purpose of the synchronous de-modulator 18 is to reject any extraneous noise and unwanted background signals. The de-modulation clock is derived from the drive matrix signal generator 17. The de-modulation clock circuitry provides both phase and quadrature clock signals to enable phase and quadrature data to be discerned from the sensed signals.

The drive matrix signal generator 17 is coupled to a power amplifier (not shown) which boosts the available current for the driving signal. The circuitry also provides clock signals for the de-modulation circuitry.

The micro-processor 20 is at the heart of the digitising tablet and it interfaces with and controls the drive matrix signal generator 17, the analogue to digital convertor 19, the synchronous de-modulator 18 and the sense multiplexer 16.

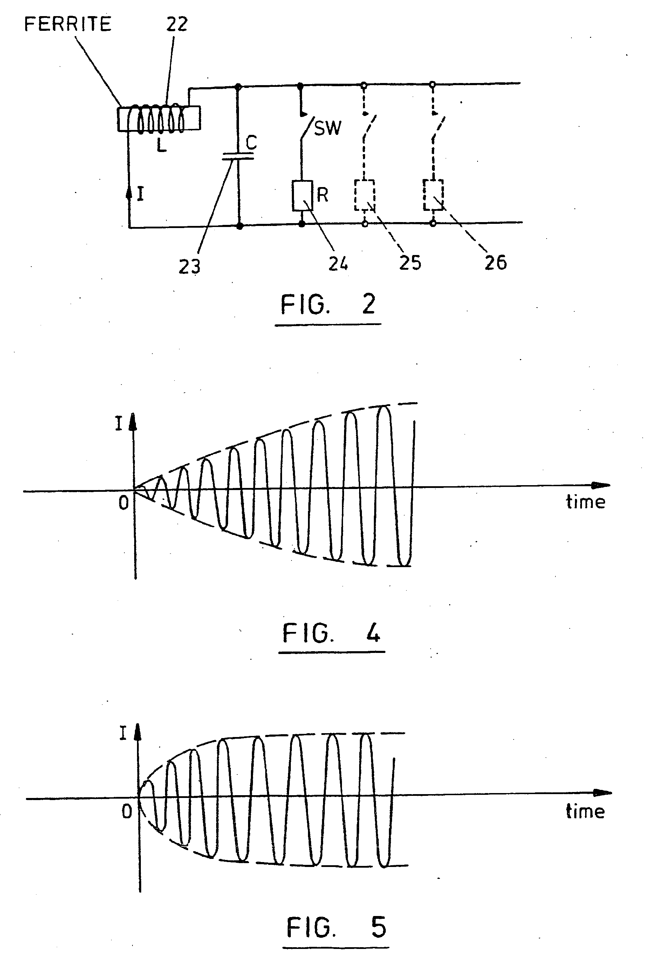

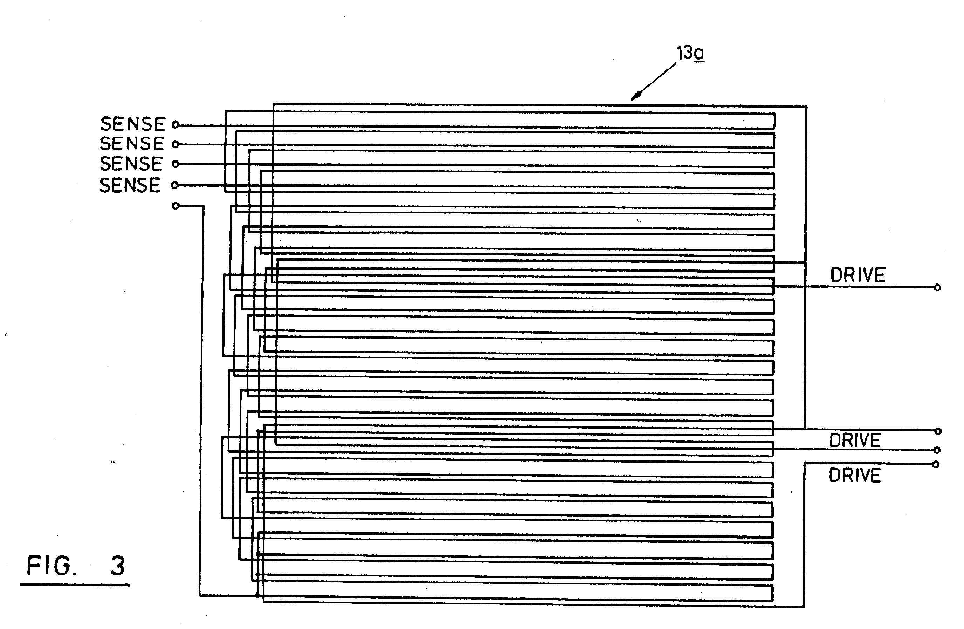

Figure 2 shows schematically a circuit of a pointer for use with the digitizing tablet of figure 1. The pointer comprises an LC tuned circuit including a coil 22 and a capacitor 23. In parallel with the tuned circuit are switched resistors of which 24, 25, 26 are examples. When the pointer is in the form of a stylus or pen the resistors are switched either axially by the stylus tip or radially using buttons (not shown).

In use, an alternating magnetic field at a frequency f₁ caused by the excitation current in a coil of the drive matrix 12 acts on the tuned circuit of the pointer 11, the resonant frequency of which is f₁. This causes the tuned circuit to resonate and the magnetic field produced by the coil 22 induces a voltage-signal into the sense matrix 13 of the tablet 10. The resistors 24, 25, 26 are switched into the circuit so as to alter the Q-factor of the LC tuned circuit.

The operation of the tablet 10 and pointer 11 will now be described in more detail, again with reference to figures 1 and 2.

The X and Y drive coils (not shown) are super-imposed in the tablet 10. The drive coils can be selected individually and, if required, in a random fashion by the drive multiplexers 14 and 15. When driving the X drive matrix 12 the Y sense matrix 13 is connected to the synchronous de-modulator 18 via the sense multiplexer 16. Conversely, when driving the Y drive matrix 12 the X sense matrix 13 is connected to the synchronous demodulator 18 via the sense multiplexer 16.

The balanced array of each of the X sense coils and Y sense coils is such as to produce a nominal null in the sensed signal when the respective orthogonal drive coil is excited and no pointing device is present. This is due to the fact that any signal induced in one of the clockwise sense coils directly by the orthogonal drive coil, will be induced in an equal and opposite sense in the corresponding counter clockwise sense coil. However, when the pointer 11 which is excited by a drive coil at its resonant frequency is placed in proximity to a sense coil it retransmits a magnetic field which induces a voltage signal in the sense coils according to its position relative to the sense coils.

The proximity of any metal objects (not shown) to the sense coils may upset the nominal balance of the sense matrix. In addition, because of the magnetic topology of the matrix, and in particular due to the finite length of the coils, the balance of the sense matrix can be upset, particularly at the edges of the tablet 10. These problems are overcome in the following two ways.

Firstly the voltage signal induced into the sense matrix 13 via the pointer 11 at its resonant frequency F₁ is inevitably phase-shifted by 90° as compared with the voltage signal induced directly from the drive matrix 12. The directly induced voltage signal is therefore largely rejected by the synchronous de-modulator 18.

Secondly, the micro-processor 20 makes a background measurement from the sense matrix 13 with the driving frequency "off tune" ie. away from the resonant frequency of the tuned circuit of the pointer 11. From this information the micro-processor 20 can extract the signal values which are purely due to the effect of the pointer 11.

Figure 3 shows the arrangement of a Y portion of the sense matrix 13a and a Y portion of the drive matrix 12a. The sense matrix 13a is of a four-phase non-overlapping type. The technique of operation is suited to many types of commonly used matrix topologies and is particularly suited to topologies in which sense coils are arranged so that there is nominally a null sense voltage when no pointer is present.

The Y sense matrix shown has an interconnected pattern which repeats several times across the surface of the tablet 10, each repeat being commonly referred to as a pitch. The number of pitches needed in a tablet is dependent upon the width of each pitch and on the size of the tablet. The sense matrix 13 permits the micro-processor to determine with high resolution the position of the pointer within a pitch. This is achieved as follows.

Four-phase signals from the sense coil are amplified and de-modulated by the synchronous demodulator 18 to generate DC voltage levels. The DC voltage levels are proportional to the amplitude of the AC signal which is being de-modulated from the sense coils. The DC voltage levels are then converted into digital values by the analogue to digital convertor 19 and are then sent to the micro-processor 20. The micro-processor 20 undertakes a vector summation on the four numbers (representing the four differently phased coils) and from this the exact position of the pointer 11 with respect to the four coils, ie. within a particular pitch, is determined.

However, the signals from the sense matrix alone cannot determine the absolute position of the pointer 11 on the tablet 10 since the micro-processor 20 cannot know from this information alone in which of the pitches the pointer is inducing the signals.

In order to determine the pitch in which the signals from the pointer are being induced, it is necessary to excite selectively the appropriate drive coils. The number of drive coils is equal to or greater than the number of pitches. For example to determine the pitch in the X axis the micro-processor 20 selectively energises the X drive coils and determines the peak amplitude and phase of the signals induced in the Y sense coils for each selected X drive coil. From this amplitude and phase information the X pitch is determined.

Conversely by selecting the Y drive coils and analyzing the X sense coils the Y pitch is determined.

The drive signal to the drive matrix 12 is of a programmable frequency. The drive matrix signal generator 17 locks onto the central frequency of the tuned circuit of the pointer 11. This is accomplished by phase and quadrature de-modulation of the sense signals using conventional radio techniques. The benefit of this is that the tuned circuits of the pointers need only be tuned to within say plus or minus 10% of their intended resonant frequencies, which reduces production time. In addition, as the tuned circuit of the pointer 11 ages, its resonant frequency changes. This is compensated for by employing the above described technique.

Because the drive signal frequency may be made to match the pointers resonant frequency accurately the directly induced sense signals (ie. from the drive matrix 12) which are 90° out of phase with the pointer induced signals may be more effectively rejected by the synchronous de-modulator 18.

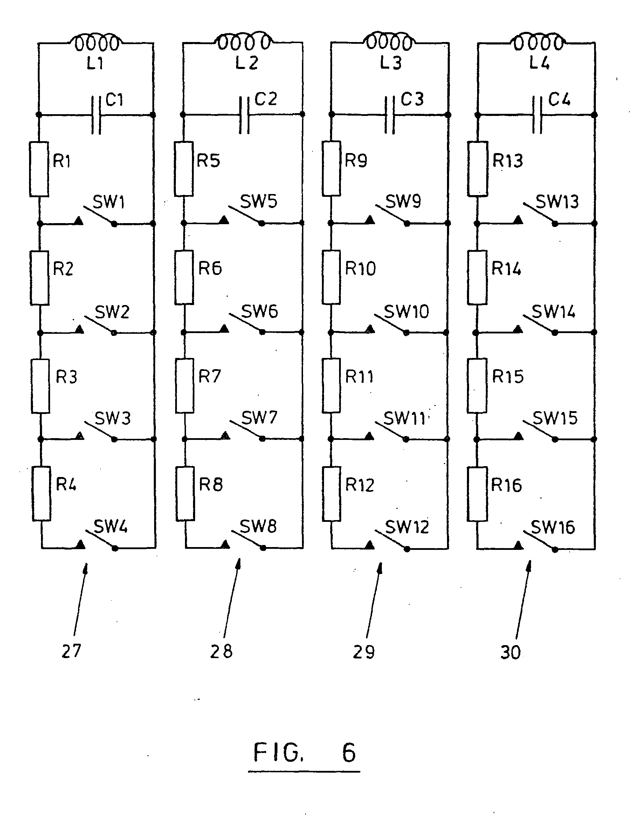

The tablet 10 is also able to determine whether and which buttons have been pressed either on the stylus, the circuit of which is shown in figure 2, or if it is used, on a cursor, a circuit of which is shown in figure 6. For example buttons on the stylus or cursor may be used to provide different information to a computer, such as for different thicknesses or colours of a line drawn on a monitor by moving the pointer across the tablet, or for entering co-ordinate points on the tablet into the computer.

Referring again to figure 2, which shows schematically the circuit of a pointer in stylus form, the circuit comprises coil 22 and capacitor 23 which together form an LC tuned circuit. Figure 5 shows the rate at which the current I in the tuned circuit rises when the circuit is subjected to a magnetic field at the tuned circuits resonant frequency. The rate of rise of the current is found by analyzing the induced signal. This is accomplished by sampling the waveform at various periods after the drive signal has been applied. Button information is encoded by switching various ones of the resistors 24, 25, 26 across the tuned circuit. The effect of switching the resistance across the tuned circuit is to dampen the Q-factor of the circuit This damping results in a lower amplitude of induced signal but more importantly a more rapid rise of amplitude. For example figure 5 represents the induced current in the tuned circuit when one of the resistors 24, 25, 26 has been connected across the tuned circuit The number of switches that can be accommodated in this way is dependent upon the resistor weighing and the resolution of the system.

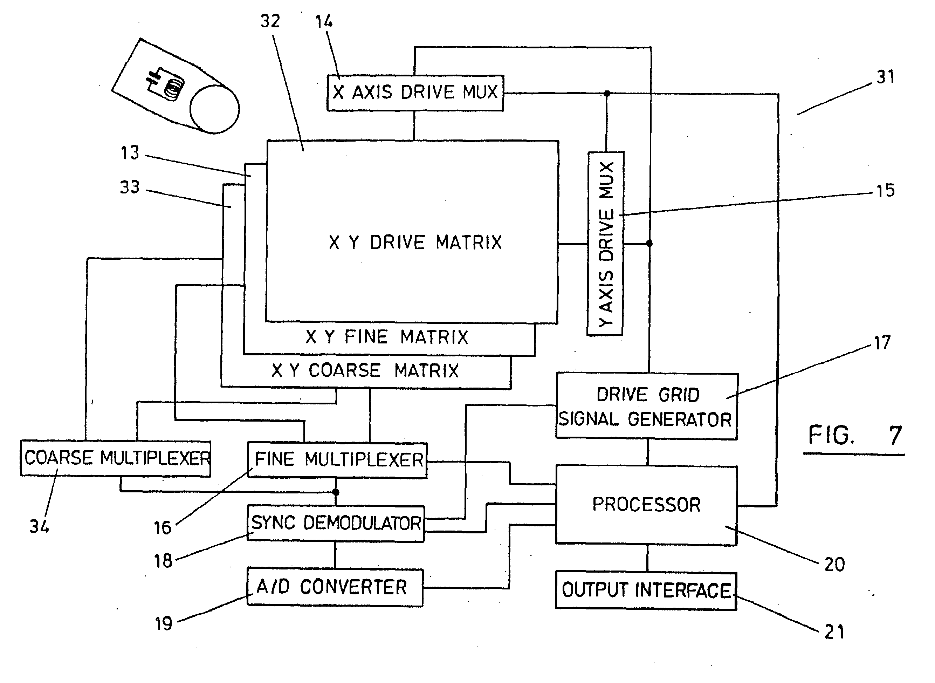

An alternative pointing device, the circuit of which is shown in figure 6, is the cursor. If it desirable for the cursor to have many button-functions the cursor can have more than one tuned circuit 27, 28, 29, 30. Each individual tuned circuit operates in the same manner as the circuit described above. In the example of figure 7 the configuration allows 16 buttons but greater or smaller numbers of buttons may be accommodated by deleting or adding tuned circuit blocks as required.

By generating and driving signals of different frequencies it is possible to have more than one pointing device in use on the tablet at the same time. The separate drive signals are made to match accurately the resonant frequencies of the different pointers and in this way the signals induced in the sensor means by the different pointers may be interpreted separately. A plurality of signal generators may be employed to generate the different frequency signals.

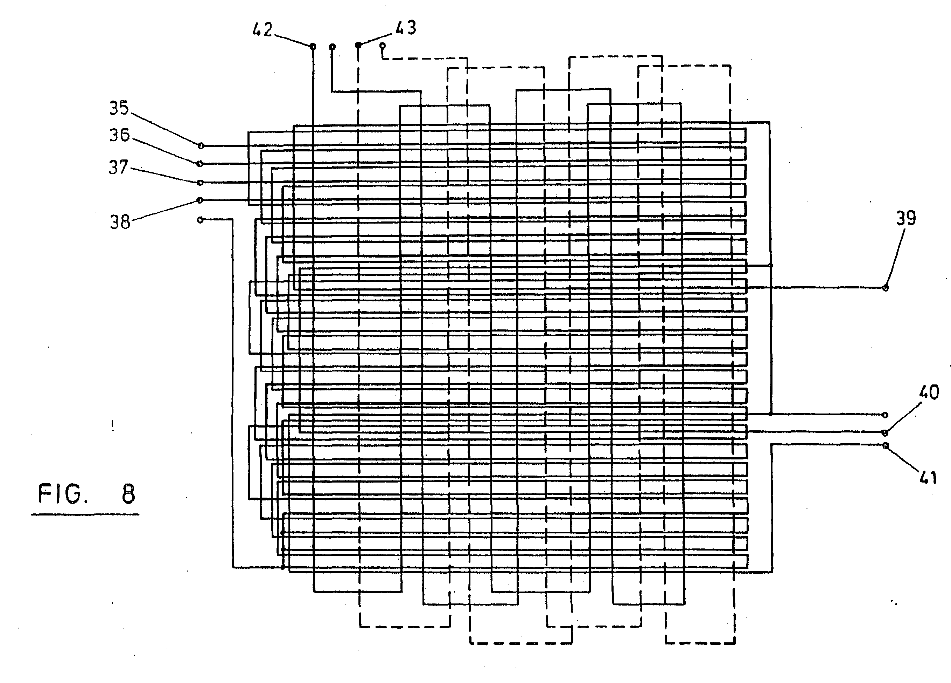

Figures 7 and 8 show respectively a schematic diagram and a matrix arrangement for an alternative embodiment of tablet 31. The structure of the tablet 31 is very similar to that of the table 10 with the following differences:

Firstly the drive matrix 32 consists only of two X drive coils and two Y drive coils (as shown in figure 8). Secondly the drive coils which were used in the tablet 10 (shown in figure 3) are in this embodiment used as coarse sense coils in a coarse sense matrix 33 and are fed into a coarse sense multiplexer 34. The multiplexed coarse sense signals are then sent to the synchronous demodulator 18 along with the multiplexed fine sense signals from the fine sense multiplexer 13.

Referring also to figure 8, this shows Y fine sense coils 35, 36, 37, 38 and Y coarse sense coils 39, 40, 41. The arrangement of the coarse coils 39, 40, 41 is that of the drive coils of figure 3. In this embodiment separate X drive coils 42, 43 are provided. The tablet also comprises X coarse and fine sense coils and Y drive coils (not shown) which are orthogonal to their counterparts shown in figure 8 and are superimposed thereon. In more detail each axis is provided with drive coils (eg. 42, 43) arranged orthogonally with respect to their associated sense coils (eg. 35, 36, 37, 38). Each drive coil is laid out in a zig-zag fashion forming clockwise and counter-clockwise loops resulting in repeated flux reversals across the tablet surface. Due to the flux reversals in the drive coils (42, 43) null points exist, ie. points at which the signal induced in the pointers tuned circuit from one (clockwise) portion of a drive coil is equal and opposite to that induced by another (counter-clockwise) portion of the same coil. To overcome this problem a plurality of drive coils are provided, ie. in this case two for each axis. The most appropriate drive coil on which to drive is selected by the processor 20 based upon the strength of signals induced in the fine sense coils from the pointer.

A number of coarse sense coils (39, 40, 41) are provided, ie. at least one coil for each pitch in both X and Y axis, in order that the relevant pitch over which the pointer is located, may be identified. Voltages are induced into the coarse sense coils by the resonating pointer in a similar manner to those induced in the fine sense coils 35, 36, 37, 38. The coarse sense signals are multiplexed into the synchronous de-modulator 18 and are converted into digital form by the analogue to digital converter 19. By analyzing the amplitude and polarity of the coarse sense signals the processor 20 determines which pitch the pointer is above. By using the method described in relation to figure 1 the process identifies where, in a particular pitch, the pointer is located.

The above described invention provides a digitizing tablet and a cordless pointer in which no suspension of the transmission of a drive signal is required during reception of a sensed signal, and in which it is not necessary to transmit a composite drive signal containing a high frequency carrier component.

The Y sense matrix shown has an interconnected pattern which repeats several times across the surface of the tablet 10, each repeat being commonly referred to as a pitch. The number of pitches needed in a tablet is dependent upon the width of each pitch and on the size of the tablet. The sense matrix 13 permits the microprocessor to determine with high resolution the position of the pointer within a pitch. This is achieved as follows.

Four-phase signals from the sense coil are amplified and de-modulated by the synchronous demodulator 18 to generate DC voltage levels. The DC voltage levels are proportional to the amplitude of the AC signal which is being de-modulated from the sense coils. The DC voltage levels are then converted into digital values by the analogue to digital convertor 19 and are then sent to the micro-processor 20. The micro-processor 20 undertakes a vector summation on the four numbers (representing the four differently phased coils) and from this the exact position of the pointer 11 with respect to the four coils, ie. within a particular pitch, is determined.

However, the signals from the sense matrix alone cannot determine the absolute position of the pointer 11 on the tablet 10 since the micro-processor 20 cannot know from this information alone in which of the pitches the pointer is inducing the signals.

In order to determine the pitch in which the signals from the pointer are being induced, it is necessary to excite selectively the appropriate drive coils. The number of drive coils is equal to or greater than the number of pitches. For example to determine the pitch in the X axis the micro-processor 20 selectively energises the X drive coils and determines the peak amplitude and phase of the signals induced in the Y sense coils for each selected X drive coil. From this amplitude and phase information the X pitch is determined.

Conversely by selecting the Y drive coils and analyzing the X sense coils the Y pitch is determined.

The drive signal to the drive matrix 12 is of a programmable frequency. The drive matrix signal generator 17 can lock onto the central frequency of the tuned circuit of the pointer 11. This is accomplished by phase and quadrature de-modulation of the sense signals using conventional radio techniques. The benefit of this is that the tuned circuits of the pointers need only be tuned to within say plus or minus 10% of their intended resonant frequencies, which reduces production time. In addition, as the tuned circuit of the pointer 11 ages, its resonant frequency changes. This is compensated for by employing the above described technique.

Because the drive signal frequency may be made to match the pointers resonant frequency accurately the directly induced sense signals (ie. from the drive matrix 12) which are 90° out of phase with the pointer induced signals may be more effectively rejected by the synchronous de-modulator 18.

The tablet 10 is also able to determine whether and which buttons have been pressed either on the stylus, the circuit of which is shown in figure 2, or if it is used, on a cursor, a circuit of which is shown in figure 6. For example buttons on the stylus or cursor may be used to provide different information to a computer, such as for different thicknesses or colours of a line drawn on a monitor by moving the pointer across the tablet, or for entering co-ordinate points on the tablet into the computer.

Referring again to figure 2, which shows schematically the circuit of a pointer in stylus form, the circuit comprises coil 22 and capacitor 23 which together form an LC tuned circuit. Figure 5 shows the rate at which the current in the tuned circuit rises when the circuit is subjected to a magnetic field at the tuned circuits resonant frequency. The rate of rise of the current is found by analyzing the induced signal. This is accomplished by sampling the waveform at various periods after the drive signal has been applied. Button information is encoded by switching various ones of the resistors 24, 25, 26 across the tuned circuit. The effect of switching the resistance across the tuned circuit is to dampen the Q-factor of the circuit. This damping results in a lower amplitude of induced signal but more importantly a more rapid rise of amplitude. For example figure 5 represents the induced current in the tuned circuit when one of the resistors 24, 25, 26 has been connected across the tuned circuit. The number of switches that can be accommodated in this way is dependent upon the resistor weighing and the resolution of the system.

An alternative pointing device, the circuit of which is shown in figure 6, is the cursor. If it desirable for the cursor to have many button-functions the cursor can have more than one tuned circuit 27, 28, 29, 30. Each individual tuned circuit operates in the same manner as the circuit described above. In the example of figure 7 the configuration allows 16 buttons but greater or smaller numbers of buttons may be accommodated by deleting or adding tuned circuit blocks as required.

By generating and driving signals of different frequencies it is possible to have more than one pointing device in use on the tablet at the same time. The separate drive signals are made to match accurately the resonant frequencies of the different pointers and in this way the signals induced in the sensor means by the different pointers may be interpreted separately. A plurality of signal generators may be employed to generate the different frequency signals.

Figures 7 and 8 show respectively a schematic diagram and a matrix arrangement for an alternative embodiment of tablet 31. The structure of the tablet 31 is very similar to that of the table 10 with the following differences:

Firstly the drive matrix 32 consists only of two X drive coils and two Y drive coils (as shown in figure 8). Secondly the drive coils which were used in the tablet 10 (shown in figure 3) are in this embodiment used as coarse sense coils in a coarse sense matrix 33 and are fed into a coarse sense multiplexer 34. The multiplexed coarse sense signals are then sent to the synchronous de-modulator 18 along with the multiplexed fine sense signals from the fine sense multiplexer 13.

Referring also to figure 8, this shows Y fine sense coils 35, 36, 37, 38 and Y coarse sense coils 39, 40, 41. The arrangement of the coarse coils 39, 40, 41 is that of the drive coils of figure 3. In this embodiment separate X drive coils 42, 43 are provided. The tablet also comprises X coarse and fine sense coils and Y drive coils (not shown) which are orthogonal to their counterparts shown in figure 8 and are superimposed thereon. In more detail each axis is provided with drive coils (eg. 42, 43) arranged orthogonally with respect to their associated sense coils (eg. 35, 36, 37, 38). Each drive coil is laid out in a zig-zag fashion forming clockwise and counterclockwise loops resulting in repeated flux reversals across the tablet surface. Due to the flux reversals in the drive coils (42, 43) null points exist, ie. points at which the signal induced in the pointers tuned circuit from one (clockwise) portion of a drive coil is equal and opposite to that induced by another (counter-clockwise) portion of the same coil. To overcome this problem a plurality of drive coils are provided, ie. in this case two for each axis. The most appropriate drive coil on which to drive is selected by the processor 20 based upon the strength of signals induced in the fine sense coils from the pointer.

A number of coarse sense coils (39, 40, 41) are provided, ie. at least one coil for each pitch in both X and Y axis, in order that the relevant pitch over which the pointer is located, may be identified. Voltages are induced into the coarse sense coils by the resonating pointer in a similar manner to those induced in the fine sense coils 35, 36, 37, 38. The coarse sense signals are multiplexed into the synchronous de-modulator 18 and are converted into digital form by the analogue to digital converter 19. By analyzing the amplitude and polarity of the coarse sense signals the processor 20 determines which pitch the pointer is above. By using the method described in relation to figure 1 the process identifies where, in a particular pitch, the pointer is located.

The above described invention provides a digitizing tablet and a cordless pointer in which no suspension of the transmission of a drive signal is required during reception of a sensed signal, and in which it is not necessary to transmit a composite drive signal containing a high frequency carrier component.

## Claims

1. Digitizing apparatus comprising a reference surface (10) and a position indication device (11) including a tuned circuit arranged in use to indicate a position of the position indicating device (11) relative to the reference surface (10), the apparatus comprising drive means (12), sensor means (13), drive signal generation means (17), and demodulator means (18), the drive means (12) being arranged, in use, to be inductively coupled to an electrical coil (22) of the position indication device (11), and the sensor means (13) being arranged in use to be inductively coupled to the electrical coil (22) of the position indication device (11), the drive signal generation means (17) being arranged, in use, to provide an electrical signal to the drive means (12), the drive means (12) being arranged, in use, to induce an electrical signal in the coil (22) of the position indication device (11), the coil (22) of the position indication device (11) being arranged in use to induce an electrical signal in the sensor means (13), wherein the sensor means (13) comprises at least one coil of electrically conducting material **characterised in that**:
the demodulator means (18) is arranged to demodulate the electrical signals induced in the sensor means (13);
the apparatus is arranged to measure a resonant frequency of the position indication device (11);
the drive signal generation means (17) is arranged to lock onto the central frequency of the tuned circuit of the position indication device (11) by the demodulation of the induced electrical signal in the sensor means (13); and
the apparatus is arranged to cause the drive means (12) to induce said electrical signal in the coil (22) as an alternating electrical signal, having a frequency which accurately matches the central frequency of the tuned circuit of the position indication device.

2. Apparatus according to daim 1 in which the position indicating device (11) is a cordless pointer.

3. Apparatus according to claim 1 or claim 2 wherein the sensor means (13) comprises at least a first coil portion which is wound in a first winding orientation and at least a second coil portion which is wound in a second winding orientation, opposed to the first winding orientation.

4. Apparatus according to claim 3 wherein the sensor means (13) comprises a plurality of coils wherein a number of the coils comprise first and second coil portions.

5. Apparatus according to claim 4 wherein at least some of the coils are arranged in a first configuration and at least some others of the coils are arranged in a second configuration substantially orthogonal to the first configuration.

6. Apparatus according to claim 4 wherein at least some of the coils of the sensor means (13) are arranged such that for each coil portion of the first winding orientation, there is a coil portion of the second winding orientation.

7. Apparatus according to any of the preceding claims wherein the drive means (12) comprise at least one electrical conductor.

8. Apparatus according to any of the preceding claims wherein the drive means (12) comprise a plurality of electrical conductors.

9. Apparatus according to claim 7 or claim 8 wherein the drive means (12) comprises a number of first electrical conductors in a first configuration and a number of second electrical conductors in a second configuration, substantially orthogonal to the first configuration.

10. Apparatus according to any of claims 7 to 9 wherein at least one of the electrical conductors of the drive means (12) comprises an electrically conducting coil in use.

11. Apparatus according to any of the preceding claims wherein the position indication device (11) comprises a tuned circuit.

## Patentansprüche

1. Digitalisiergerät mit einer Bezugsoberfläche (10) und einer einen abgestimmten Schwingkreis aufweisenden Lageaufzeigungsvorrichtung (11), das bei Verwendung zum Aufzeigen der Lage der Lageaufzeigungsvorrichtung (11) relativ zu der Bezugsoberfläche (10) angeordnet ist, das Gerät ist versehen mit einer Ansteuerungseinrichtung (12),einer Sensoreinrichtung (13), einer Signalgeneratoreinrichtung (17) zur Erzeugung eines Ansteuerungssignals und einer Demodulatoreinrichtung (18); die Ansteuerungseinrichtung (12) ist bei Verwendung so angeordnet, dass sie an eine elektrische Spule (22) der Lageaufzeigungsvorrichtung (11) induktiv gekoppelt ist, und die Sensoreinrichtung (13) ist bei Verwendung so angeordnet, dass sie an die elektrische Spule (22) der Lageaufzeigungsvorrichtung (11) induktiv gekoppelt ist, die Signalgeneratoreinrichtung (17) zur Erzeugung eines Ansteuerungssignals ist bei Verwendung so angeordnet, dass sie der Ansteuerungseinrichtung (12) ein elektrisches Signal zur Verfügung stellt, die Ansteuerungseinrichtung (12) ist bei Verwendung so angeordnet, dass sie ein elektrisches Signal in der Spule (22) der Lageaufzeigungsvorrichtung (11) induziert, und die Spule (22) der Lageaufzeigungsvorrichtung (11) ist bei Verwendung so angeordnet, dass sie ein elektrisches Signal in der Sensoreinrichtung (13) induziert, wobei die Sensoreinrichtung (13) zumindest eine Spule aus einem elektrisch leitenden Werkstoff aufweist, das Gerät ist **dadurch gekennzeichnet,**
**dass** die Demodulatoreinrichtung (18) so angeordnet ist, dass sie das in der Sensoreinrichtung (13) induzierte elektrische Signal demoduliert,
**dass** das Gerät so angeordnet ist, dass eine Resonanzfrequenz der Lageaufzeigungsvorrichtung (11) gemessen wird,
**dass** die Signalgeneratoreinrichtung (17) zur Erzeugung eines Ansteuerungssignals so angeordnet ist, dass sie mit der Hauptfrequenz des abgestimmten Schwingkreises der Lageaufzeigungsvorrichtung (11) gekoppelt wird, indem das in der Sensoreinrichtung (13) induzierte Signal demoduliert wird,
und **dass** das Gerät so angeordnet ist, dass die Ansteuerungseinrichtung (12) veranlasst wird, das genannte elektrische Signal in der Spule (22) als elektrisches Wechselsignal mit einer Frequenz zu induzieren, die der Hauptfrequenz des abgestimmten Schwingkreises der Lageaufzeigungsvorrichtung genau gleicht.

2. Gerät nach Anspruch 1, wobei die Lageaufzeigungsvorrichtung (11) eine schnurlose Zeigevorrichtung ist.

3. Gerät nach Anspruch 1 oder 2, wobei die Sensoreinrichtung (13) mit zumindest einem in einer ersten Windungsrichtung gewundenen ersten Wicklungsabschnitt und zumindest einem in einer zweiten, der ersten Windungsrichtung entgegengesetzten Windungsrichtung gewundenen zweiten Wicklungsabschnitt versehen ist.

4. Gerät nach Anspruch 3, wobei die Sensoreinrichtung (13) eine Vielzahl von Wicklungen aufweist, wobei eine Anzahl der Wicklungen erste und zweite Wicklungsabschnitte aufweist.

5. Gerät nach Anspruch 4, wobei zumindest einige der Wicklungen in einer ersten Konfiguration angeordnet sind, und zumindest einige andere der Wicklungen in einer zweiten Konfiguration angeordnet sind, die zu der ersten Konfiguration im Wesentlichen orthogonal ist.

6. Gerät nach Anspruch 4, wobei zumindest einige der Wicklungen der Sensoreinrichtung (13) derart angeordnet sind, dass für jeden Wicklungsabschnitt der ersten Windungsrichtung ein Wicklungsabschnitt der zweiten Windungsrichtung existiert.

7. Gerät nach einem beliebigen der vorstehenden Ansprüche, wobei die Ansteuerungseinrichtung (12) zumindest einen elektrischen Leiter aufweist.

8. Gerät nach einem beliebigen der vorstehenden Ansprüche, wobei die Ansteuerungseinrichtung (12) eine Vielzahl von elektrischen Leitern aufweist.

9. Gerät nach Anspruch 7 oder 8, wobei die Ansteuerungseinrichtung (12) eine Anzahl von ersten elektrischen Leitern in einer ersten Konfiguration und eine Anzahl von zweiten elektrischen Leitern in einer zweiten Konfiguration aufweist, die zu der ersten Konfiguration im Wesentlichen orthogonal ist.

10. Gerät nach einem beliebigen der Ansprüche 7 bis 9, wobei zumindest einer der elektrischen Leiter der Ansteuerungseinrichtung (12) eine elektrisch leitende Wicklung in Verwendung aufweist.

11. Gerät nach einem beliebigen der vorstehenden Ansprüche, wobei die Lageaufzeigungsvorrichtung (11) eine abgestimmte Schaltung aufweist.

## Revendications

1. Appareil de numérisation comprenant une surface de référence (10) et un dispositif d'indication de position (11), incluant un circuit accordé, agencé pour, en fonctionnement, indiquer une position du dispositif d'indication de position (11) par rapport à la surface de référence (10), l'appareil comprenant un moyen d'entraînement (12), un moyen capteur (13), un moyen de génération de signal d'entraînement (17), et un moyen démodulateur (18), le moyen d'entraînement (12) étant agencé pour, en fonctionnement, être couplé de manière inductive à une bobine électrique (22) du dispositif d'indication de position (11), et le moyen capteur (13) étant agencé pour, en fonctionnement, être couplé de manière inductive à la bobine électrique (22) du dispositif d'indication de position (11), le moyen de génération du signal d'entraînement (17) étant agencé pour, en fonctionnement, fournir un signal électrique au moyen d'entraînement (12), le moyen d'entraînement (12) étant agencé pour, en fonctionnement, induire un signal électrique dans la bobine (22) du dispositif d'indication de position (11), la bobine (22) du dispositif d'indication de position (11) étant agencée pour, en fonctionnement, induire un signal électrique dans le moyen capteur (13), où le moyen capteur (13) comprend au moins une bobine d'un matériau conducteur de l'électricité, **caractérisé en ce que** :
le moyen démodulateur (18) est agencé pour démoduler les signaux électriques induits dans le moyen capteur (13);
l'appareil est agencé pour mesurer une fréquence de résonance du dispositif d'indication de position (11) ;
le moyen de génération du signal d'entraînement (17) est agencé pour régler la fréquence centrale du circuit accordé du dispositif d'indication de position (11) par la démodulation du signal électrique induit dans le moyen capteur (13) ; et
l'appareil est agencé pour que le moyen d'entraînement (12) induise ledit signal électrique dans la bobine (22) sous forme d'un signal électrique alternatif, ayant une fréquence qui est exactement égale à la fréquence centrale du circuit accordé du dispositif d'indication de position.

2. Appareil suivant la revendication 1, dans lequel le dispositif d'indication de position (11) est un pointeur sans fil.

3. Appareil suivant la revendication 1 ou 2, dans lequel le moyen capteur (13) comprend au moins une première partie de bobine qui est enroulée suivant une première orientation d'enroulement et au moins une deuxième partie de bobine qui est enroulée suivant une deuxième orientation d'enroulement, opposée à la première orientation d'enroulement.

4. Appareil suivant la revendication 3, dans lequel le moyen capteur (13) comprend une série de bobines où un certain nombre des bobines comprend des première et deuxième parties de bobine.

5. Appareil suivant la revendication 4, dans lequel au moins certaines bobines sont agencées dans une première configuration et au moins certaines autres bobines sont agencées suivant une deuxième configuration, sensiblement orthogonale à la première configuration.

6. Appareil suivant la revendication 4, dans lequel au moins certaines bobines du moyen capteur (13) sont agencées de sorte que, pour chaque partie de bobine de la première orientation d'enroulement, il y a une partie de bobine dans la deuxième orientation d'enroulement.

7. Appareil suivant l'une quelconque des revendications précédentes, dans lequel le moyen d'entraînement (12) comprend au moins un conducteur électrique.

8. Appareil suivant l'une quelconque des revendications précédentes, dans lequel le moyen d'entraînement (12) comprend une série de conducteurs électriques.

9. Appareil suivant la revendication 7 ou 8, dans lequel le moyen d'entraînement (12) comprend un certain nombre de premiers conducteurs électriques suivant une première configuration et un certain nombre de deuxièmes conducteurs électriques suivant une deuxième configuration, sensiblement orthogonale à la première configuration.

10. Appareil suivant l'une quelconque des revendications 7 à 9, dans lequel l'un au moins des conducteurs électriques du moyen d'entraînement (12) comprend une bobine qui, en fonctionnement, conduit l'électricité.

11. Appareil suivant l'une quelconque des revendications précédentes, dans lequel le dispositif d'indication de position (11) comprend un circuit accordé.
